# FASCICULE DE BREVET EUROPEEN

(11) **EP 1 323 557 B1**
(45) Date de publication et mention de la délivrance du brevet: **27.02.2008**
(21) Numéro de dépôt: 02364046.9
(22) Date de dépôt: 10.12.2002
(51) Int. Cl.: B60J 1/14, E06B 3/32, E06B 7/06

(54) **Dispositif d'obturation d'une baie ménagée dans un véhicule, à panneau mobile en rotation, et véhicule correspondant**
Schliesseinrichtung einer Fahrzeugöffnung mit einer rotatorisch beweglichen Scheibe und zugehörigem Fahrzeug
Closing device for an opening in a vehicle with a mobile rotatory pane and corresponding vehicle

(30) Priorité: 10.12.2001 FR 0116003
(43) Date de publication de la demande: 02.07.2003
(73) Titulaire: WAGON SAS, 79300 Bressuire (FR)
(72) Inventeur: Devanne, Christophe, 79300 Chambroutet (FR); Moreau, Stéphane, 49300 Le Puy Saint Bonnet (FR); Maltaverne, Guy, 79300 Bressuire (FR); Leduque, Cédric, 17100 SAINTES (FR)
(74) Mandataire: Vidon, Patrice

(56) Documents cités:
- EP-A- 0 626 282
- DE-A- 4 333 609
- US-A- 4 407 540
- PATENT ABSTRACTS OF JAPAN vol. 009, no. 107 (M-378), 11 mai 1985 (1985-05-11) -& JP 59 230819 A (SHIYATAI KOGYO KK), 25 décembre 1984 (1984-12-25)
- PATENT ABSTRACTS OF JAPAN vol. 1996, no. 03, 29 mars 1996 (1996-03-29) -& JP 07 300017 A (SUZUKI MOTOR CORP), 14 novembre 1995 (1995-11-14)
- PATENT ABSTRACTS OF JAPAN vol. 1998, no. 03, 27 février 1998 (1998-02-27) -& JP 09 291765 A (KATO GIKEN:KK), 11 novembre 1997 (1997-11-11)

## Description

Le domaine de l'invention est celui des baies de véhicules automobiles. Plus précisément, l'invention concerne les dispositifs d'obturation d'une baie ménagée dans la carrosserie d'un véhicule, et comprenant une partie mobile, susceptible de libérer ou de fermer une ouverture. Un tel dispositif d'obturation est connu du document EP-A-0626282.

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture d'une vitre d'automobiles est de rendre celle-ci mobile verticalement dans son propre plan, en la faisant pénétrer ou sortir du caisson ou de la garniture des portières latérales.

Cette technique est aujourd'hui couramment utilisée et des solutions pour l'automatiser sont connues. L'équipement des automobiles en vitres électriques est aujourd'hui très répandu.

Cette technique présente cependant de nombreux inconvénients. Les moyens d'actionnement et d'entraînement sont lourds, encombrants et complexes à monter. Les portes qui en résultent présentent en conséquence un volume important, nuisant au volume disponible à l'intérieur du véhicule (largeur aux coudes notamment).

Elles ont de plus un coût de fabrication élevé et posent classiquement des problèmes d'étanchéité. La maintenance est également complexe. Elles imposent en outre des contraintes sur le plan de l'esthétique et de l'ergonomie.

Une autre technique a été proposée par le titulaire de la présente demande de brevet. Cette technique est notamment décrite dans les documents de brevet EP-A--0 778 168 et EP-A--0 857 844. Le dispositif d'obturation (appelé par la suite "baie flush") présenté dans ces documents comprend un ensemble fixe et une partie mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie flush peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP-A-1 022 172. On résout ainsi la plupart des problèmes identifiés plus haut.

Sur le plan esthétique, la baie flush présente, vue de l'extérieur, un aspect lisse, affleurant, du fait qu'aucun cadre n'est nécessaire.

Le mouvement de la partie mobile peut être, par exemple, basculant ou coulissant. On décrit ci-après, rapidement, un exemple de ce dernier cas.

Pour assurer un coulissement de la partie mobile, constitué généralement par un panneau transparent, les moyens fonctionnels comprennent un dispositif de guidage comportant un premier et un second rails de guidage montés fixes sur l'ensemble fixe de la baie, de part et d'autre de l'ouverture fermée par le panneau mobile. Celui-ci est monté sur les rails, pour coulisser selon une direction longitudinale, dans un plan de coulissement entre une (ou plusieurs) position d'ouverture et une position intermédiaire de dégagement dans laquelle il est en regard de la baie et dégagé de celle-ci.

Des moyens d'articulation assurent la liaison du panneau avec les rails de guidage de façon à permettre un déplacement transversal du panneau entre sa position intermédiaire de dégagement dans laquelle il est en regard et en retrait transversal de la baie, et sa position d'obturation dans laquelle il est enchâssé dans la baie. Le panneau mobile passe ainsi du plan formé par l'ensemble fixe (position d'obturation) à un plan sensiblement parallèle de coulissement, et réciproquement.

Cette technique s'avère avantageuse, tant sur le plan esthétique que sur celui de la fabrication et du montage. Cependant, dans certaines situations, il n'est pas possible, ou peu aisé, de mettre en oeuvre une telle vitre coulissante. Cela est par exemple le cas lorsque la forme et/ou la structure du véhicule, ou au moins de sa portière, ne peut pas recevoir les rails de maintien et/ou de guidage.
De la même façon, il n'est pas souhaitable que ces rails soient placés de façon centrale, et donc visible au travers de l'ensemble fixe (ils sont généralement posés proches d'un bord, et dissimulés de l'extérieur à l'aide, par exemple, d'une sérigraphie).
Par ailleurs, le principe général de coulissement suppose, selon l'art antérieur connu, la présence de deux rails parallèles. Cela s'applique aux baies sensiblement rectangulaires, et aux panneaux mobiles également rectangulaires. Cela est en revanche plus difficile à adapter, par exemple à une baie de forme sensiblement triangulaire (il est difficile de prévoir deux rails parallèles), ou encore à un panneau mobile de forme quelconque, par exemple circulaire ou ovoïde.
En outre, la motorisation de ces baies coulissantes, qui suppose l'actionnement de deux déplacements successifs et perpendiculaires, reste à l'heure actuelle complexe à mettre en oeuvre.
L'invention a notamment pour objectif de pallier ces différents inconvénients.

Plus précisément, un objectif de l'invention est de fournir un dispositif d'obturation de type "baie flush" ne nécessitant pas la mise en oeuvre de rails de coulissement, ou d'autres moyens relativement encombrants.
Un autre objectif de l'invention est de fournir un tel dispositif, mettant en oeuvre une nouvelle cinématique du panneau mobile, de façon à permettre, par exemple, une présentation et/ou une distribution originale, ou adaptée à un véhicule particulier, de la baie et/ou de son panneau mobile (ou de ses panneaux mobiles). L'invention a également pour objectif de fournir un tel dispositif, permettant la mise en oeuvre de panneaux mobiles de formes quelconques, et par exemple circulaire.

L'invention a encore pour objectif de fournir un tel dispositif d'obturation qui puisse être aisément et efficacement motorisé.

Un autre objectif de l'invention est de fournir un tel dispositif d'obturation d'une baie qui conserve l'ensemble des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

Ces objectifs, ainsi que d'autres qui apparaîtront par la suite, sont atteints à l'aide d'un dispositif d'obturation selon la revendication 1.

Il s'agit donc d'une cinématique tout à fait nouvelle, qui comme on le verra par la suite, est bien adapté à de nombreuses formes de panneau mobile, et particulièrement simple à mettre en oeuvre, de façon manuelle ou motorisée.

Selon un mode de réalisation préférentiel de l'invention, ledit axe unique porte un pas de vis.

Comme déjà mentionné, le fonctionnement peut être manuel, à l'aide par exemple d'une poignée montée sur l'axe de rotation. De façon avantageuse, cependant, les déplacements dudit panneau mobile sont assurés par des moyens de motorisation.

Dans ce cas, lesdits moyens de motorisation agissent avantageusement sur ledit pas de vis, celui-ci permettant d'effectuer ledit déplacement de verrouillage/déverrouillage par vissage/dévissage, et ledit déplacement de rotation, dans une position de butée.

Avantageusement, le dispositif de l'invention comprend des moyens pour plaquer ladite partie mobile, en position ouverte, contre ledit ensemble fixe, par exemple en inversant le sens de rotation des moyens de motorisation.

De façon préférentielle, ledit axe unique est monté sur ledit panneau mobile de façon que lorsque ledit dispositif est monté sur ledit véhicule, ledit axe unique s'étend vers l'intérieur dudit véhicule.

Selon un mode de réalisation avantageux, le dispositif d'obturation de l'invention forme un ensemble complet destiné à être rapporté, de l'extérieur d'un véhicule, sur une baie définie dans la carrosserie de ce dernier.

Préférentiellement, les moyens assurant la mobilité dudit panneau mobile sont montés sur ledit ensemble fixe de façon que, lorsque celui-ci est monté sur ledit véhicule, ils s'étendent vers l'intérieur dudit véhicule.

Lesdits moyens de motorisation sont prévus pour être solidarisés à ladite carrosserie. Ils peuvent également être solidaire du dispositif (qui forme alors un tout prêt à être monté sur un véhicule).

L'invention concerne également les véhicules comprenant au moins un dispositif d'obturation tel que décrit ci-dessus.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins parmi lesquels :
- la figure 1 illustre de façon schématique le principe général de la cinématique de la partie mobile d'un dispositif d'obturation selon l'invention ;
- la figure 2 illustre de façon schématique un mode de réalisation selon lequel le dispositif d'obturation selon l'invention est motorisé ;
- la figure 3 illustre une variante de l'invention, dans laquelle l'ouverture est circulaire.

Comme déjà précisé, l'invention propose une cinématique nouvelle pour un panneau mobile d'un dispositif d'obturation d'une baie d'un véhicule, reposant notamment sur une rotation de ce dernier, tout en restant en permanence sensiblement parallèle « à lui-même », ou, plus exactement, au plan défini par la baie. En d'autres termes, le panneau mobile passe dans une pluralité de plans, tous sensiblement parallèles.

Le terme « sensiblement » signifie qu'il peut y avoir des jeux, des décalages ou des déplacements qui ne sont pas parfaitement rectilignes, du fait de la structure et de la forme de la baie et du véhicule, des matériaux, des tolérances, de l'usure, ... Il n'englobe pas en revanche le cas d'un panneau « en travers » d'un dispositif louvoyant.

On notera par ailleurs que le terme « plan » doit ici s'entendre dans une acception élargie : le plan formé par la baie est généralement courbe, selon une, voire deux, directions (cela peut justifier également, dans certains cas, le terme « sensiblement »).

La cinématique du panneau mobile est donc, comme on le verra par la suite, décomposée en deux mouvements séparés (en *x* et en *y*) :
- ouverture/fermeture, par un déplacement en translation le long de l'axe de rotation (munie par exemple d'un pas de vis) ;
- rotation autour de l'axe, pour libérer plus ou moins l'ouverture (l'écrou étant alors bloqué sur le pas de vis).

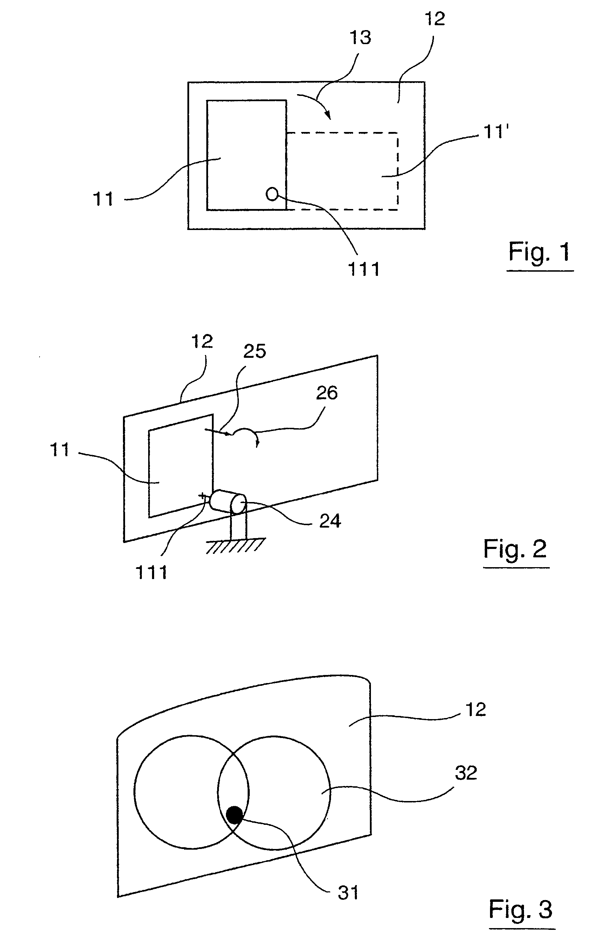

La figure 1 illustre de façon schématique cette technique.

Le dispositif d'obturation comprend donc une partie mobile 11 par rapport à un ensemble fixe 12 destiné à être rapporté sur la carrosserie d'un véhicule.

Selon l'invention, la partie mobile 11 peut être déplacée en rotation 13 autour d'un axe 111, entre deux positions extrêmes : une position d'obturation indiquée par la référence 11 et une position d'ouverture de la baie indiquée par la référence 11' (en pointillés).

L'axe 111 est solidaire de la partie mobile 11 et perpendiculaire (ou quasi-perpendiculaire) à celui-ci. La position de l'axe 111, ici au voisinage d'un angle du panneau mobile, peut varier, et pourra par exemple être recentré le long d'un des bords du panneau.

Le mouvement de rotation de la partie mobile, parallèlement au plan de la baie, permet ainsi d'obtenir une cinématique du dispositif d'obturation selon l'invention totalement nouvelle par rapport aux cinématiques des dispositifs d'obturation connus.

Il résulte notamment de cette cinématique que la position occupée en position d'ouverture par la partie mobile du dispositif d'obturation selon l'invention est notablement différente de celle qu'elle occuperait dans des dispositifs d'obturation traditionnels.

Cela permet, notamment, de mieux utiliser certains espaces, qui auraient dus être laissés libres pour permettre un coulissement, de réaliser de montages originaux du panneau mobile, voire des combinaisons de plusieurs panneaux mobiles.
On notera que le panneau mobile peut être escamoté, au moins partiellement, à l'intérieur d'une garniture, par exemple, dans le prolongement latéral de la baie ou, de haut en bas, à l'intérieur du caisson de la portière.

On dispose ainsi d'une baie flush efficace et aisée à mettre en oeuvre. L'axe unique de rotation permet en effet de contrôler les deux déplacements perpendiculaires du panneau mobile :
- un déplacement 25 de verrouillage/déverrouillage, perpendiculaire au plan formé par l'ensemble fixe 12, et permettant le passage du plan formé par l'ensemble fixe 12 à un plan de rotation, sensiblement parallèle au plan formé par l'ensemble fixe 12, et réciproquement ;
- un déplacement de rotation 26 autour d'un axe dans un plan de rotation parallèle au plan formé par l'ensemble fixe 12.

On notera que ce déplacement de rotation 26 s'effectue ici à l'intérieur du véhicule par rapport à l'ensemble fixe 12. Il peut également, dans certains cas, se faire vers l'extérieur.

Selon le mode de réalisation illustré, par la figure 2, l'axe 111 porte un pas de vis couplé à des moyens de motorisation 24 qui assurent la mobilité du panneau mobile 11.

L'axe de rotation 111 est placé dans un angle, ou au moins prêt d'un bord, de la partie mobile 11, pour permettre un bon dégagement de l'ouverture. Il s'étend perpendiculairement au plan fixe de la baie, défini notamment par l'ensemble fixe 12.

Cet axe 111 porte une vis sans fin, entraînée par le moteur 24, qui peut être relié à la carrosserie du véhicule, ou à la baie.

Lors de l'ouverture (la partie mobile 11 étant au départ enchâssée dans l'ensemble fixe 12), la vis sans fin entraînée par le moteur 24 fait reculer 25 la vitre mobile 11, sans qu'elle ne tourne.

Après dégagement, c'est-à-dire lorsqu'elle est placée dans un plan d'ouverture, le système vis/écrou (l'écrou étant solidaire du panneau mobile) est bloqué, à l'aide d'une butée réalisée par exemple sur le pas de vis. La vitre mobile 11 est alors entraînée en rotation 26, de façon à s'escamoter et à libérer l'ouverture (figure 1).

Il est possible de plaquer la vitre ouverte (ou partiellement ouverte), par exemple en prévoyant des moyens libérant le blocage sur le pas de vis. Les moyens de motorisation, actionnés en sens inverse, appliquant alors le panneau mobile contre l'ensemble fixe. Un joint d'étanchéité peut permettre d'assurer la fonction d'amortisseur, lors de ce placage.

De nombreuses variantes peuvent être envisagées, dans la mise en oeuvre de cette approche. Notamment, comme déjà mentionné, l'escamotage peut également se faire vers le bas (le cas échéant à l'intérieur de la portière).

Bien entendu, le mécanisme peut également être manuel, comme cela est illustré en figure 3. On place alors une poignée 31 dans le prolongement du pas de vis, qu'il suffit de tourner pour obtenir l'un des déplacements puis l'autre. Une telle poignée peut également être prévue, éventuellement sous une forme amovible, bien qu'une motorisation soit intégrée.

On notera, sur cette figure 3, la forme circulaire du panneau mobile 32, pour laquelle l'invention s'avère bien adaptée. Plus généralement, le panneau peut être de forme quelconque.

D'autres modes de réalisation, ainsi que des variantes et des perfectionnements, sont envisageables.

En particulier, bien qu'un seul panneau mobile soit représenté, il est bien sûr possible d'un prévoir plusieurs.

Enfin, on ne détaille pas les éléments complémentaires ou annexes (joint d'étanchéité, système de verrouillage, dispositif anti-effraction,...), qui pourront bien sûr être intégrés à la baie de l'invention.

## Revendications

1. Dispositif d'obturation d'une baie ménagée dans la carrosserie d'un véhicule automobile, comprenant un ensemble fixe (12) destiné à être rapporté sur ladite carrosserie et une partie mobile (11) par rapport audit ensemble fixe (12),
**caractérisé en ce que** ledit panneau mobile (11) met en oeuvre une cinématique par rapport audit ensemble fixe (12) décomposée en deux déplacements :
- un déplacement (25) de verrouillage/déverrouillage, perpendiculaire au plan formé par ledit ensemble fixe (12), et permettant le passage du plan formé par ledit ensemble fixe (12) à un plan de rotation, sensiblement parallèle audit plan formé par ledit ensemble fixe (12), et réciproquement ;
- un déplacement (26) de rotation autour d'un axe dans ledit plan de rotation,
ladite cinématique étant contrôlée par l'intermédiaire d'un axe unique (111) solidaire dudit panneau mobile (11), perpendiculaire à celui-ci et monté au voisinage d'un bord ou d'un angle dudit panneau mobile (11).

2. Dispositif d'obturation selon la revendication 1, **caractérisé en ce que** ledit axe unique (111) porte un pas de vis.

3. Dispositif d'obturation selon l'une quelconque des revendications 1 et 2, **caractérisé en ce que** les déplacements dudit panneau mobile sont assurés par des moyens de motorisation (24).

4. Dispositif d'obturation selon les revendications 2 et 3, **caractérisé en ce que** lesdits moyens de motorisation (24) agissent sur ledit pas de vis (111), celui-ci permettant d'effectuer ledit déplacement de verrouillage/déverrouillage par vissage/dévissage, et ledit déplacement de rotation, dans une position de butée.

5. Dispositif d'obturation selon l'une quelconque des revendications 1 à 4, **caractérisé en ce que** ledit axe unique (111) est monté sur ledit panneau mobile (11) de façon que lorsque ledit dispositif est monté sur ledit véhicule, ledit axe unique (111) s'étend vers l'intérieur dudit véhicule.

6. Dispositif d'obturation selon l'une quelconque des revendications 1 à 7, **caractérisé en ce qu**'il comprend des moyens pour plaquer ladite partie mobile (11), en position ouverte, contre ledit ensemble fixe (12).

7. Dispositif d'obturation selon l'une quelconque des revendications 1 à 8, **caractérisé en ce qu**'il forme un ensemble complet destiné à être rapporté, de l'extérieur d'un véhicule, sur une baie définie dans la carrosserie de ce dernier.

8. Dispositif d'obturation selon l'une quelconque des revendications 1 à 7, **caractérisé en ce que** les moyens assurant la mobilité dudit panneau mobile sont montés sur ledit ensemble fixe (11) de façon que , lorsque celui-ci est monté sur ledit véhicule, ils s'étendent vers l'intérieur dudit véhicule.

9. Dispositif d'obturation selon l'une quelconque des revendications 3 à 8, **caractérisé en ce que** lesdits moyens de motorisation (24) sont prévus pour être solidarisé à ladite carrosserie.

10. Véhicule comprenant au moins un dispositif d'obturation selon l'une quelconque des revendications 1 à 9.

## Claims

1. Device for closing an opening made in a motor vehicle body, comprising a fixed assembly (12) intended for being joined to the said body and a part (11) which is movable with respect to the said fixed assembly (12), **characterized in that** the said movable panel (11) uses kinematics with respect to the said fixed assembly (12), broken down into two movements:
- a locking/unlocking movement (25), perpendicular to the plane formed by the said fixed assembly (12) and with which the passage can take place from the plane formed by the said fixed assembly (12) to a rotation plane, substantially parallel with the said plane formed by the said fixed assembly (12) and vice-versa
- a movement (26) of rotation about an axis in the said rotation plane,
the said kinematics being controlled by means of a single pin (111) rigidly fastened to the said movable panel (11), perpendicular to the latter and fitted in the vicinity of an edge or corner of the said movable panel (11).

2. Closing device according to claim 1, **characterized in that** the said single pin (111) has a screw thread.

3. Closing device according to either of claims 1 or 2, **characterized in that** the movements of the said movable panel are provided by motorization means (24).

4. Closing device according to claims 2 and 3, **characterized in that** the said motorization means (24) act on the said screw thread (111), the latter making it possible for the said locking/unlocking movement to be carried out by screwing/unscrewing and for the said rotation movement to be carried out, in a limit stop position.

5. Closing device according to any of claims 1 to 4, **characterized in that** the said single pin (111) is fitted to the said movable panel (11) so that, when the said device is fitted to the said vehicle, the said single pin (111) projects towards the inside of the said vehicle.

6. Closing device according to any of claims 1 to 7, **characterized in that** it comprises means for pressing the said movable part (11), in the open position, against the said fixed assembly (12).

7. Closing device according to any of claims 1 to 8, **characterized in that** it forms a complete assembly intended for being joined, from the outside of a vehicle, to an opening defined in the body of the latter.

8. Closing device according to any of claims 1 to 7, **characterized in that** the means providing the mobility of the said movable panel are fitted to the said fixed assembly (11) so that, when the latter is fitted to the said vehicle, they project towards the inside of the said vehicle.

9. Closing device according to any of claims 3 to 8, **characterized in that** the said motorization means (24) are provided for being rigidly fastened to the said body.

10. Vehicle comprising at least one closing device according to any of claims 1 to 9.

## Patentansprüche

1. Schließeinrichtung einer in der Karosserie eines Kraftfahrzeuges befindlichen Öffnung, die eine feststehende Gruppe (12), welche auf die besagte Karosserie aufgebracht werden soll, sowie ein gegenüber der feststehenden Gruppe (12) bewegliches Teil (11) aufweist,
**dadurch gekennzeichnet, dass** das besagte bewegliche Paneel (11) gegenüber der feststehenden Gruppe (12) eine nach zwei Bewegungen aufgeteilte Kinematik in Gang setzt:
- eine Verriegelungs-/Entriegelungsbewegung (25), die senkrecht zu der von der besagten feststehenden Gruppe (12) gebildeten Ebene verläuft und den Übergang von der besagten feststehenden Gruppe (12) gebildeten Ebene, zu einer Rotationsebene, die in etwa parallel zu der besagten, von der feststehenden Gruppe (12) gebildeten Ebene liegt, sowie den umgekehrten Übergang, ermöglicht;
- eine Drehbewegung (26) um eine in der besagten Rotationsebene liegenden Achse, wobei die besagte Kinematik über eine einzige Achse (111) gesteuert wird, die mit dem beweglichen Paneel (11) verbunden ist, senkrecht auf diesem Paneel steht und in der Nähe eines Randes oder eines Winkels des besagten beweglichen Paneels (11) angebracht ist.

2. Schließeinrichtung nach Anspruch 1, **dadurch gekennzeichnet, dass** die besagte einzige Achse (111) mit einem Gewinde versehen ist.

3. Schließeinrichtung nach einem der Ansprüche 1 oder 2, **dadurch gekennzeichnet, dass** die Bewegungen des besagten beweglichen Paneels von Motorisierungsmitteln (24) getätigt werden.

4. Schließeinrichtung nach den Ansprüchen 2 und 3, **dadurch gekennzeichnet, dass** die besagten Motorisierungsmittel (24) auf das besagte Gewinde (111) wirken, wobei dieses die Ausführung der besagten Verriegelungs-/Entriegelungsbewegung durch Zudrehen/Aufdrehen des Gewindes sowie die Ausführung der Drehbewegung bis zu einer Anschlagsposition ermöglicht.

5. Schließeinrichtung nach einem der Ansprüche 1 bis 4, **dadurch gekennzeichnet, dass** die besagte einzige Achse (111) derart auf dem beweglichen Paneel (11) angebracht ist, dass wenn die besagte Einrichtung auf das Fahrzeug montiert wird, die besagte einzige Achse (111) sich zum Fahrzeuginneren hin erstreckt.

6. Schließeinrichtung nach einem der Ansprüche 1 bis 5, **dadurch gekennzeichnet, dass** sie über Mittel zum Andrücken des besagten beweglichen Teils (11) in der offenen Position gegen die besagte feststehende Gruppe (12) verfügt.

7. Schließeinrichtung nach einem der Ansprüche 1 bis 6, **dadurch gekennzeichnet, dass** sie eine komplette Gruppe bildet, die von der Außenseite des Fahrzeugs auf eine in der Karosserie des besagten Fahrzeugs befindliche Öffnung aufgebracht werden soll.

8. Schließeinrichtung nach einem der Ansprüche 1 bis 7, **dadurch gekennzeichnet, dass** die Mittel, welche die Beweglichkeit des besagten beweglichen Paneels gewährleisten, so auf der feststehenden Gruppe (12) angebracht sind, dass wenn diese auf das besagte Fahrzeug montiert wird, sie sich zum Fahrzeuginneren hin erstrecken.

9. Schließeinrichtung nach einem der Ansprüche 3 bis 8, **dadurch gekennzeichnet, dass** die besagten Motorisierungsmittel (24) so ausgelegt sind, dass sie mit der Karosserie fest verbunden werden.

10. Fahrzeug, das mindestens eine Schließeinrichtung nach einem der Ansprüche 1 bis 9 aufweist.
